# EUROPEAN PATENT APPLICATION

(11) **EP 4 491 998 A1**
(43) Date of publication of application: **15.01.2025**
(21) Application number: 24186503.9
(22) Date of filing: 04.07.2024
(51) Int. Cl.: G01B 11/24, G01B 11/02, G01B 11/08, G01B 11/04, G01B 11/10, G01B 11/245

(54) **MEASURING DEVICE AND FORMING MACHINE**

(30) Priority: 10.07.2023 JP 2023113019
(71) Applicant: ASAHI-SEIKI MANUFACTURING CO., LTD., Owariasahi-shi Aichi 488-8655 (JP)
(72) Inventor: NAKAZAKI, Yasuo, Owariasahi-shi, Aichi, 488-8655 (JP); YAMANAKA, Hajime, Owariasahi-shi, Aich, 488-8655 (JP)
(74) Representative: Kramer Barske Schmidtchen Patentanwälte PartG mbB

(57) **Abstract**

A measuring device (20A) according to the present embodiment includes a camera (24) configured to image, in air, a compression coil spring (91) that is formed by a forming machine (10A). Then, an image processing unit (62A) performs image processing on the image of the compression coil spring (91) captured by the camera (24), to measure a dimension of the compression coil spring (91).

## Description

### BACKGROUND OF THE INVENTION

### (1) Field of the Invention

The present invention relates to a measuring device that measures a dimension of a workpiece or a matching degree with a master workpiece, and a forming machine including such a measuring device.

### (2) Description of Related Art

As a conventional measuring device, there is known a device that measures a dimension of a workpiece by image processing of an image of the workpiece captured by a camera (for example, JP 5666954 B2 (see paragraph [0020], FIG. 2) .

### SUMMARY OF THE INVENTION

However, in the above-described conventional measuring device, there may be a case where a support member supporting a workpiece is reflected on an image thereby hiding part of the workpiece during imaging, or a case where the support member is erroneously recognized as part of the workpiece during image processing, or another failure occurs, and measurement cannot be performed accurately. Hence, development of a technology for solving the issue is required.

A measuring device according to an aspect of the present invention includes: a guide bar having a curved rod shape with one end portion extending in a horizontal direction or a direction inclined with respect to the horizontal direction to be connected to a forming machine that forms a coil spring and fitted to an inner side of the coil spring that is being formed by the forming machine, and another end portion extending in a vertical direction below the one end portion, the guide bar discharging the coil spring from the another end portion; a camera configured to image, in air, the coil spring in a vertical posture freely falling from the guide bar; and an image processing unit configured to perform image processing on an image of the coil spring captured by the camera, and to measure a dimension of the coil spring or a matching degree with a master workpiece.

### BRIEF DESCRIPTION OF THE DRAWINGS

FIG. 1 is a front view of a forming machine according to a first embodiment;
FIG. 2 is a perspective view of a coiling tool, a pitch tool, and the like of the forming machine;
FIG. 3 is a block diagram of a controller;
FIG. 4A is a side view of a wire rod immediately before being formed into a compression coil spring and a tool group, FIG. 4B is a side view of the wire rod and the tool group at an initial stage of forming, and FIG. 4C is a side view of the wire rod and the tool group at an intermediate stage of the forming;
FIG. 5A is a side view of the wire rod and the tool group at a final stage of forming, and FIG. 5B is a side view of a state in which the compression coil spring is disconnected from a remaining portion of the wire rod;
FIG. 6A is a side view of the compression coil spring immediately after forming, and FIG. 6B is a side view of a completed compression coil spring through a grinding step;
FIG. 7 is a sectional side view of the forming machine;
FIG. 8 is a sectional front view of the measuring device;
FIG. 9A is an image diagram when an outer diameter is measured from an image of the compression coil spring, FIG. 9B is an image diagram when a total length is measured from the image of the compression coil spring, and FIG. 9C is an image diagram when a pitch is measured from the image of the compression coil spring;
FIG. 10 is a horizontal sectional view of a measuring device according to a second embodiment;
FIGS. 11A and 11B relate to a third embodiment, FIG. 11A is an image view of an image of a master workpiece, and FIG. 11B is an image diagram of a state in which an image of the compression coil spring captured by the camera is superimposed on the image of the master workpiece; and
FIG. 12 is an image diagram when a dimension is measured from an image of a compression coil spring according to a fourth embodiment.

### DETAILED DESCRIPTION OF PREFERRED EMBODIMENTS

### [First embodiment]

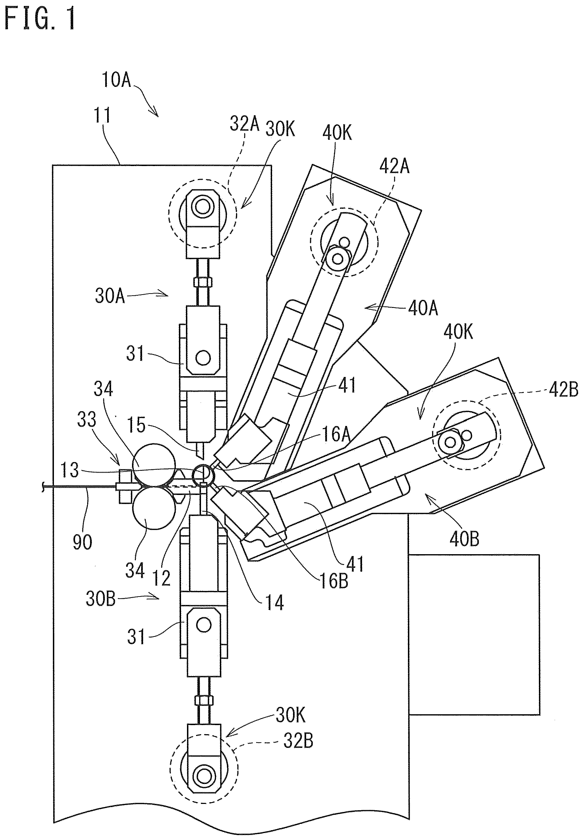

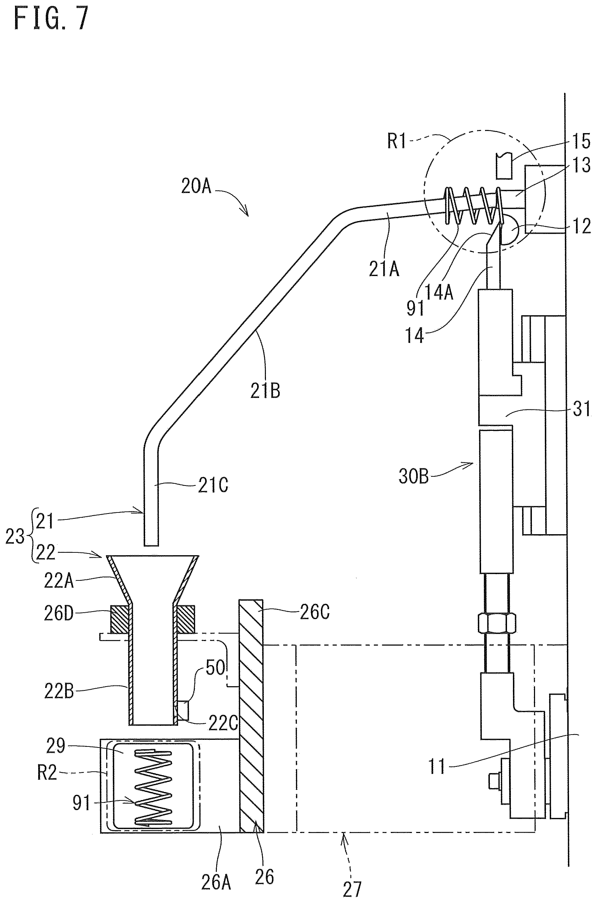

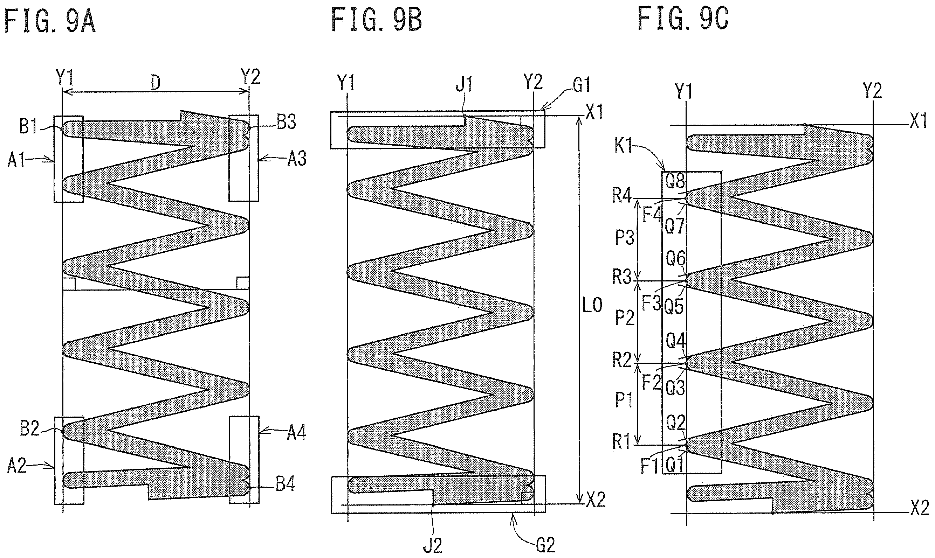

A forming machine 10A according to the present embodiment will be described with reference to FIGS. 1 to 9A, 9B, and 9C. As illustrated in FIG. 1, a forming machine 10A includes a wire rod feeding device 33, a pair of pitch and cut slide mechanisms 30A and 30B, a pair of coiling slide mechanisms 40A and 40B, a measuring device 20A (see FIG. 7), and the like assembled to a base 11 that vertically stands.

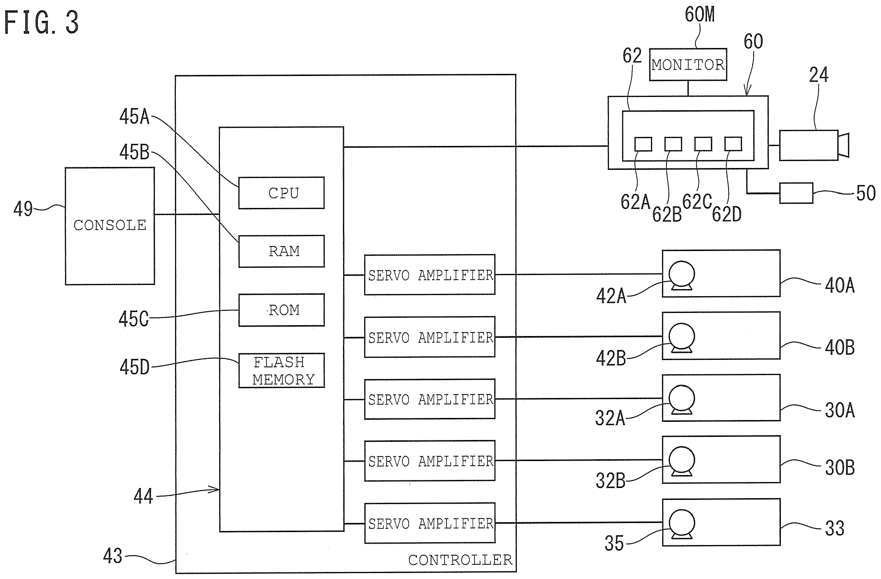

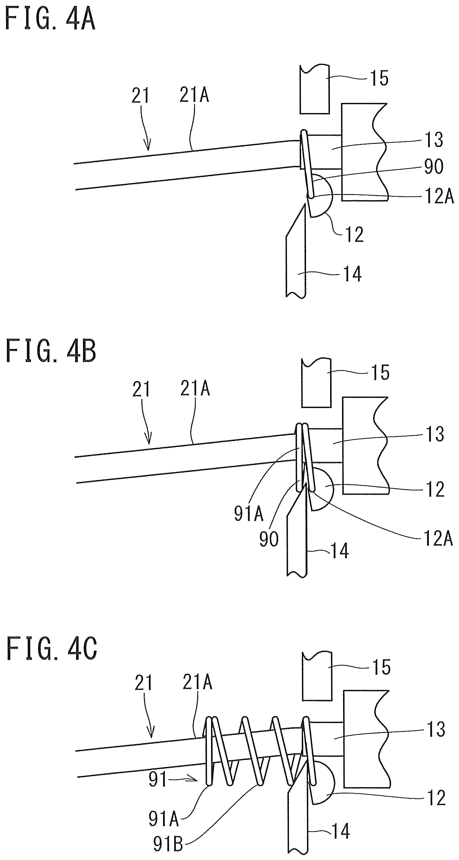

The wire rod feeding device 33 includes a pair of rollers 34 disposed on a front surface of a base 11 and arranged vertically. As illustrated in FIG. 1, a wire rod guide 12 extends on a tangent line common to the pair of rollers 34. The pair of rollers 34 are rotationally driven symmetrically by a servomotor 35 (see FIG. 3) in a state of having a wire rod 90 sandwiched between the rollers 34, so that the wire rod 90 is fed to a right side in FIG. 1, passes through a through hole 12A (see FIG. 4A) of the wire rod guide 12, and is fed from a tip of the wire rod guide 12.

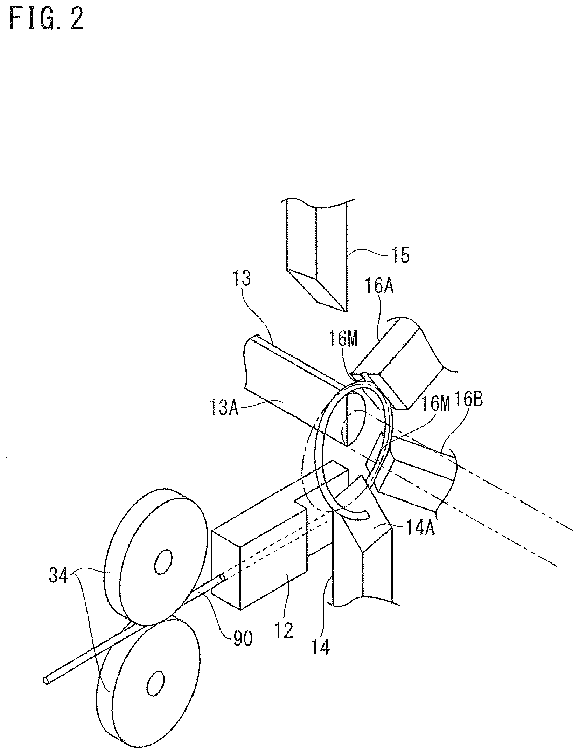

A core metal 13 protruding from the front surface of the base 11 is provided in front of the wire rod guide 12 in a wire rod feeding direction. As illustrated in FIG. 2, the core metal 13 has, for example, a rod shape having a semicircular cross section, and its side surface 13A that is flat faces the wire rod guide 12.

As illustrated in FIG. 1, the pair of coiling slide mechanisms 40A and 40B are disposed away from the wire rod feeding device 33 with respect to the core metal 13 and each extend in a direction inclined with respect to an up-down direction. The coiling slide mechanisms 40A and 40B respectively include crank slider mechanisms 40K each including a slider 41 that approaches and separates from the core metal 13. The crank slider mechanisms 40K are driven by servomotors 42A and 42B (see FIG. 3).

Each of a pair of coiling tools 16A and 16B is fixed to the slider 41 of each of the pair of coiling slide mechanisms 40A and 40B. As illustrated in FIG. 2, the coiling tool 16A which is one of the pair abuts against the core metal 13 from obliquely above, and the coiling tool 16B which is the other of the pair abuts against the core metal 13 from obliquely below. A round groove 16M is formed on a tip end surface of each of the coiling tools 16A and 16B. The wire rod 90 fed from the wire rod feeding device 33 is guided to the round groove 16M of each of the coiling tools 16A and 16B, and the wire rod 90 is formed in an arc shape so as to surround the core metal 13 to become the compression coil spring 91 (see FIG. 4C). The compression coil spring 91 grows in a direction away from the base 11.

As illustrated in FIG. 1, the pair of pitch and cut slide mechanisms 30A and 30B extend in the up-down direction and are arranged vertically symmetrically with the core metal 13 interposed therebetween. The pitch and cut slide mechanisms 30A and 30B respectively include crank slider mechanisms 30K each including a slider 31 that slides in the up-down direction. The crank slider mechanisms 30K are driven by servomotors 32A and 32B.

A cutting tool 15 is fixed to the slider 31 of the pitch and cut slide mechanism 30A which is on an upper side, and the wire rod 90 is cut by the cutting tool 15 and the core metal 13. On the other hand, a pitch tool 14 is fixed to the slider 31 of the pitch and cut slide mechanism 30B which is on a lower side. As illustrated in FIG. 2, the tip of the pitch tool 14 has an inclined surface 14A in a wedge shape. When the inclined surface 14A abuts on the wire rod 90 forming the compression coil spring 91 from the base 11 side and the pitch tool 14 is moved upward, the pitch of the compression coil spring 91 increases. When the pitch tool 14 is moved downward, the pitch of the compression coil spring 91 decreases.

FIG. 3 illustrates a controller 43 that controls the forming machine 10A. The controller 43 includes servo amplifiers of the servomotors 32A, 32B, 35, 42A, and 42B described above, and a control circuit 44 connected to those servo amplifiers. The control circuit 44 has a CPU 45A, a RAM 45B, a ROM 45C, and a flash memory 45D. When the CPU 45A executes a spring forming program (not illustrated) stored in the ROM 45C, the above-described servomotors 32A, 32B, 35, 42A, and 42B are driven and controlled, and the compression coil spring 91 is sequentially formed from the wire rod 90.

Specifically, in the spring forming program, for example, a plurality of division points obtained by dividing a feeding length of one compression coil spring 91 to be fed by the wire rod feeding device 33 into a plurality of parts are set, and teaching of positions of the coiling tools 16A and 16B, the pitch tool 14, and the cutting tool 15 are performed for each of the division points. When the spring forming program is executed, the wire rod feeding device 33, the coiling tools 16A and 16B, the pitch tool 14, and the cutting tool 15 operate as described below by a so-called teaching playback.

The wire rod feeding device 33 feeds the wire rod 90 that has been cut by the cutting tool 15 and the core metal 13 at a preset feeding speed (see FIG. 4A). Then, the wire rod 90 that has been fed is brought into contact with an inner surface of the round groove 16M in each of the coiling tools 16A and 16B and is brought into sliding contact with the inclined surface 14A of the pitch tool 14 to be formed in an arc shape (see FIG. 2). Specifically, in an initial stage of spring forming as illustrated in FIGS. 4A to 4B, the pitch tool 14 is disposed at a first forming position slightly raised from an initial position, and the wire rod 90 for one turn is fed in this state to form an end turn 91A on a tip side.

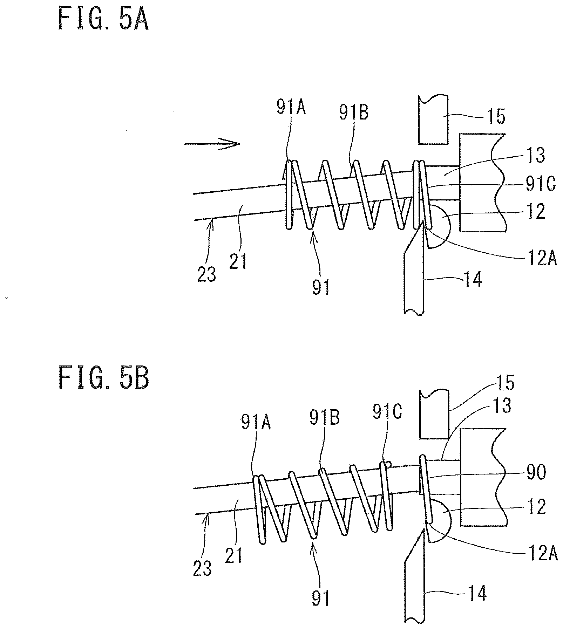

Next, as illustrated in FIGS. 4B to 4C, the pitch tool 14 is raised from the first forming position to a second forming position, and the wire rod 90 for a plurality of turns is fed in this state to form a coil body 91B. Then, as illustrated in FIGS. 4C to 5A, the pitch tool 14 is lowered again to the first forming position, and the wire rod 90 for one turn is fed to form an end turn 91C on a rear end side. Then, after the pitch tool 14 is retracted to a standby position separated from the compression coil spring 91, the cutting tool 15 is lowered from the initial position, and the compression coil spring 91 is disconnected from a remaining portion of the wire rod 90 (see FIG. 5B). Then, the tool group of the coiling tools 16A and 16B, the pitch tool 14, and the cutting tool 15 returns to the initial position (see FIG. 4A) .

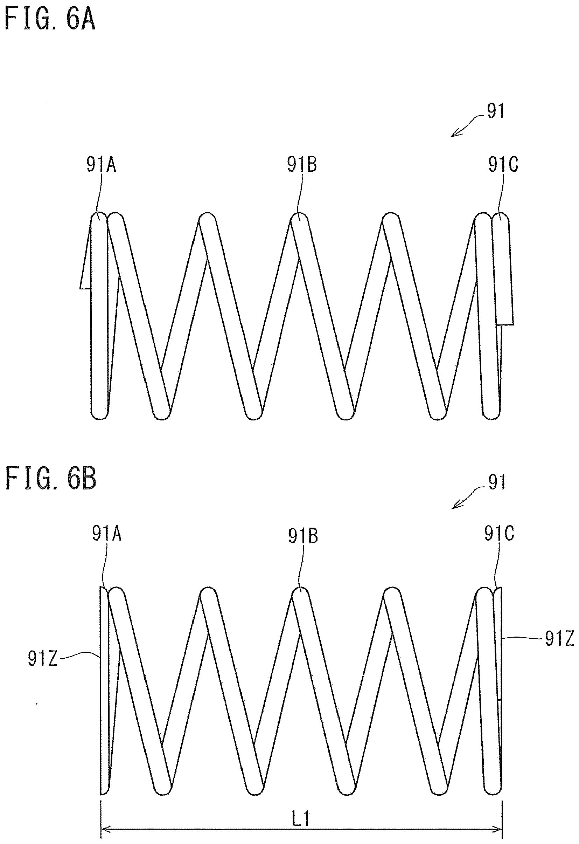

FIG. 6A illustrates the compression coil spring 91 discharged from the forming machine 10A in an enlarged manner. The compression coil spring 91 is then sent to a grinding step, and both end surfaces thereof are ground by a spring polishing device disclosed in, for example, JP 6964956 B2, JP 2019-084643 A, and the like. Then, as illustrated in FIG. 6B, a pair of end surfaces 91Z perpendicular to a winding center axis are provided at both ends, and when a distance between the pair of end surfaces 91Z reaches a preset spring length L1, the grinding step ends, and the compression coil spring 91 is completed.

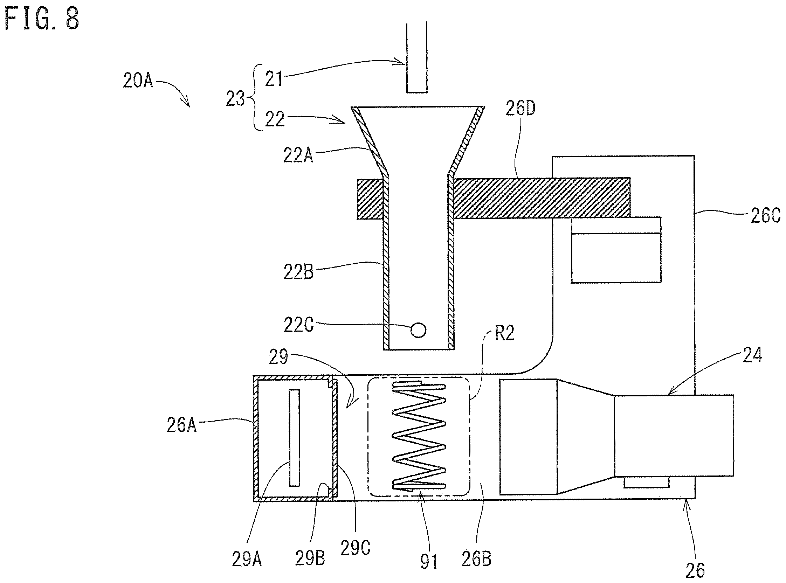

As illustrated in FIGS. 7 and 8, the measuring device 20A has a workpiece guide 23 and a camera 24 (in FIG. 1, the measuring device 20A is omitted.). The workpiece guide 23 includes, for example, a guide bar 21 and a guide pipe 22. The guide bar 21 is a round bar bent at two points in the longitudinal direction of the round bar. A starting end portion 21A of the guide bar 21 is connected to a tip end surface of the core metal 13 and extends to be slightly inclined downward as being away from the core metal 13. An intermediate portion 21B of the guide bar 21 is bent from an end of the starting end portion 21A and extends to be inclined downward at a steep angle from the starting end portion 21A. A terminal end portion 21C of the guide bar 21 is bent from an end of the intermediate portion 21B and extends vertically downward.

The guide pipe 22 has, for example, a tapered portion 22A extending in the vertical direction as a whole and expanding in diameter upward at an upper end portion, and has a straight portion 22B having a uniform inner diameter below the tapered portion 22A. The guide pipe 22 is disposed coaxially below the terminal end portion 21C of the guide bar 21, and a lower end of the guide bar 21 abuts against an upper surface opening of the guide pipe 22. A through hole 22C laterally penetrating through the inside and the outside of the guide pipe 22 is formed near the lower end thereof, and is covered by a sensor 50 fixed to an outer surface of the guide pipe 22. When a lower end portion of the compression coil spring 91 passes in front of the through hole 22C, this passing is detected by the sensor 50.

The sensor 50 may be of any type if it is a noncontact type, and may be, for example, any of an optical type, a magnetic type, an electric field type, a capacitance type, or the like. The sensor 50 may be disposed above or below the guide pipe 22. Furthermore, the terminal end portion 21C of the guide bar 21 may be received inside the guide pipe 22. The guide bar 21 may be a solid bar or a hollow bar (that is, a pipe).

The guide pipe 22 is supported by a base portion 26, and the base portion 26 is supported by a bracket 27 fixed to the front surface of the base 11. Although not illustrated in detail, the bracket 27 has, for example, a structure in which a support plate is bridged between tips of a pair of opposing walls facing each other with a lower end portion of the pitch and cut slide mechanism 30B on a lower side laterally interposed therebetween. The base portion 26 is fixed to a front surface of the bracket 27, the front surface being opposite to the base 11.

As illustrated in FIG. 8, the base portion 26 includes, for example, a laterally long portion 26B extending in a wire rod feeding direction (hereinafter, referred to as a "lateral direction" as appropriate) of the wire rod 90 when viewed from the front, a forward protruding portion 26A protruding forward from one end of the laterally long portion 26B, and an upward protruding portion 26C protruding upward from the other end of the laterally long portion 26B. The camera 24 is attached to an end portion of the laterally long portion 26B having the upward protruding portion 26C.

The camera 24 is, for example, a CCD camera or a CMOS camera with a telecentric lens, and a front surface (that is, a surface having a lens) of the camera 24 and the forward protruding portion 26A face each other with a space therebetween. The camera 24 may be of any type if it can capture an image as digital data.

A support beam 26D is fixed to an upper front surface of the upward protruding portion 26C, and the guide pipe 22 is supported by the support beam 26D. A lower end portion of the guide pipe 22 is positioned directly above a front region R2 (specifically, a region surrounded on three sides by the camera 24, the forward protruding portion 26A, and the laterally long portion 26B) of the camera 24. As a result, as illustrated in FIG. 7, the compression coil spring 91 formed in a forming region R1 of the forming machine 10A is guided by the workpiece guide 23 to descend to a position above the front region R2 of the camera 24, and further freely falls therefrom to pass through the front region R2 of the camera 24. Currently, the camera 24 operates based on the detection result of the sensor 50, and the compression coil spring 91 in air is imaged by the camera 24.

A container (not illustrated) is provided below the front region R2 of the camera 24, and the compression coil spring 91 having passed through the front region R2 of the camera 24 is accommodated in the container and conveyed to the above-described grinding step. Instead of the container, for example, a bar or a pipe extending in the up-down direction may be provided, and the compression coil spring 91 may be fitted to the bar or the pipe.

As illustrated in FIG. 8, a backlight 29 is provided on a surface of the forward protruding portion 26A, the surface facing the camera 24. Specifically, the forward protruding portion 26A has, for example, a rectangular cylindrical shape and has a light emitting substrate 29A in the inside thereof. A through hole 29B is formed in the surface of the forward protruding portion 26A, the surface facing the camera 24, and the through hole 29B is covered with, for example, a milky color light-transmitting member 29C. As a result, part of the forward protruding portion 26A constitutes the backlight 29, and the backlight 29 emits light when the camera 24 images the compression coil spring 91, so that a boundary between the compression coil spring 91 and the other portions is defined.

As illustrated in FIG. 3, the measuring device 20A has a control unit 60 connected to the controller 43. The control unit 60 includes, for example, a control circuit 62 that includes a CPU 62A, a RAM 62B, a ROM 62C, and a flash memory 62D. The CPU 62A executes an imaging program stored in the ROM 62C upon activation of the forming machine 10A. When receiving the detection result of the sensor 50, the CPU 62A operates the camera 24 at the timing when the compression coil spring 91 passes through the front region R2 of the camera 24 as described above. Then, an image of the compression coil spring 91 captured by the camera 24 is stored in the flash memory 62D.

When the image is taken into the flash memory 62D, the CPU 62A executes an image processing program stored in the ROM 62C. The CPU 62A when the image processing program is executed serves as an "image processing unit" of the measuring device 20A.

The CPU 62A as the image processing unit performs the following image processing on the image of the compression coil spring 91 illustrated in FIGS. 9A to 9C. That is, a plurality of pixels (in FIGS. 9A to 9C, each pixel is omitted) constituting the image are distinguished into black pixels in a portion corresponding to the compression coil spring 91 and white pixels in a portion corresponding to the background, and thereby a contour of the compression coil spring 91 is specified. Then, pattern matching is performed between this image (hereinafter, referred to as a "target image" as appropriate) and a standard image stored in the ROM 62C, and first, an outer diameter D of the compression coil spring 91 is specified. Specifically, first, four rectangular frames A1 to A4 illustrated in FIG. 9A that are registered in the standard image are set in the target image. Points B1 to B4 each on the outermost side in the left-right direction in FIG. 9A are acquired correspondingly in the frames A1 to A4. Next, a straight line Y1 is obtained by connecting the point B1 in the upper left frame and the point B2 in the lower left frame by a straight line, and a straight line Y2 is obtained by connecting the point B3 in the upper right frame and the point B4 in the lower right frame by a straight line. Then, a distance between the straight line Y1 and the straight line Y2 is specified as the outer diameter D of the compression coil spring 91 and stored in the flash memory 62D.

Next, a total length L0 of the compression coil spring 91 is specified. Specifically, first, two rectangular frames G1 and G2 illustrated in the up and down portions of FIG. 9B that are registered in the standard image, are set in the target image. Points J1 and J2 each on the outermost side in the up-down direction in FIG. 9B are acquired correspondingly in the frames G1 and G2. Next, perpendicular lines X1 and X2 respectively passing through the points J1 and J2 and perpendicular to the straight lines Y1 and Y2 are acquired. Then, a distance between the perpendicular line X1 and the perpendicular line X2 is specified as the total length L0 of the compression coil spring and stored in the flash memory 62D.

Lastly, a pitch of the compression coil spring 91 is specified. Specifically, first, a rectangular frame K1 illustrated in FIG. 9C that is registered in the standard image, is set in the target image. Next, straight lines Q1 to Q8 are acquired that are correspondingly extended along the four bent portions of the compression coil spring 91 in the frame K1. Then, in a lowermost bent portion in the frame K1, a midpoint F1 between intersections where the straight lines Q1 and Q2 intersect on the straight line Y1 is acquired, and a center line R1 parallel to the perpendicular lines X1 and X2 passing through the midpoint F1 is obtained. Similarly, midpoints F2 to F4 are acquired for bent portions other than the bent portion of the lowermost portion in the frame K1, and center lines R2 to R4 are obtained. Then, distances each between adjacent center lines among the center lines R1 to R4 are specified as the pitches P1 to P3 of the compression coil spring 91 and stored in the flash memory 62D.

When the measurement data group is stored in the flash memory 62D, a quality control program stored in the ROM 62C is executed. The CPU 62A when the quality control program is executed serves as a "quality control unit" of the measuring device 20A. Here, in the ROM 62C, reference values of a plurality of stages are set in advance for each piece of measurement data of the spring length L0, the outer diameter D, and the pitches P1 to P3, for example. The CPU 62A as the quality control unit displays notifications having different levels such as warning, caution, and abnormality on a monitor 60M depending on which stage of the reference value each piece of the measurement data falls within. For example, when any piece of measurement data is at an abnormal level, an abnormality signal is output to the controller 43, and the forming machine 10A is stopped.

The configuration of the present embodiment has been described above. As described above, in the measuring device 20A according to the present embodiment, the dimension of the compression coil spring 91 is measured by performing the image processing of the image of the compression coil spring 91 captured in air. Therefore, occurrence of failures can be suppressed that the support member supporting the compression coil spring 91 is reflected on the image and is erroneously recognized as part of the compression coil spring 91, or part of the compression coil spring 91 is hidden by the support member as in the related art. Thus, measurement by the image processing can be more accurately performed than in the related art.

Furthermore, since the compression coil spring 91 discharged from the forming region R1 of the forming machine 10A is guided by the workpiece guide 23 to descend to a position above the front region R2 of the camera 24 and then falls into the front region R2 of the camera 24, a posture of the compression coil spring 91 during imaging is stabilized, and thereby measurement of dimension and the like by the image processing is facilitated.

The workpiece guide 23 includes the guide bar 21 having a curved rod shape, and the starting end portion 21A of the guide bar 21 is fitted to an inner side of the compression coil spring 91 that is being formed, and the terminal end portion 21C extends in the vertical direction, so that the compression coil spring 91 discharged from the forming region R1 of the forming machine 10A can be smoothly guided to a position directly above the front region R2 of the camera 24. In addition, since the compression coil spring 91 falls into the front region R2 of the camera 24 in a posture in which the center axis is aligned along the vertical direction, imaging of the entire compression coil spring 91 is facilitated.

The present embodiment includes the guide pipe 22 disposed coaxially below the guide bar 21. Since the compression coil spring 91 passes through the inner side of the guide pipe 22, the guide pipe 22 can be firmly supported from the outside. As a result, guiding of the compression coil spring 91 to the position directly above the front region R2 of the camera 24 is stabilized, and the posture of the compression coil spring 91 during imaging is further stabilized.

In addition, the guide pipe 22 is provided with the sensor 50 that detects the passage of the compression coil spring 91, and the camera 24 operates according to the detection result by the sensor 50, to image the compression coil spring 91. Therefore, the data number of images caused by useless imaging in which the compression coil spring 91 is not reflected is suppressed, and storing images is facilitated.

In addition, since the backlight 29 is provided that is arranged to face the camera 24 from the front, the compression coil spring 91 and the background can be easily distinguished from each other in the image of the compression coil spring 91, and measurement of the dimension and the like of the compression coil spring 91 by the image processing is facilitated. Furthermore, since the camera 24 is provided with the telecentric lens, a difference in appearance of the compression coil spring 91 between a side close to the camera 24 and a side far from the camera 24 is suppressed, and the measurement of the dimension and the like of the compression coil spring 91 by the image processing is facilitated.

Furthermore, since the measuring device 20A is included in the forming machine 10A and sequentially measures the dimension of the sequentially formed compression coil spring 91, efficient measurement can be performed.

In the forming machine 10A according to the present embodiment, the measurement result by the measuring device 20A is used for quality control, but control data of the tool group of the forming machine 10A may be automatically changed based on the measurement result by the measuring device 20A. For this purpose, for example, as disclosed in JP 5777184 B2, the forming machine 10A according to the present embodiment may be configured to predict a dimension management target part by an autoregressive model to calculate a correction amount.

Furthermore, for example, regression analysis by machine learning may be used. Specifically, for example, the control data of each tool group set by teaching is changed to various values as explanatory variables, and the compression coil spring 91 is formed with each piece of control data changed to the various values. Then, the measuring device 20A measures the spring length L0, the outer diameter D, and the pitches P1 to P3 of the compression coil spring 91, and performs regression analysis by machine learning using the measurement results as target variables for the above-described explanatory variables. Then, the control data for forming any desired spring length L0, outer diameter D, and pitches P1 to P3 may be determined using the learned model.

### [Second embodiment]

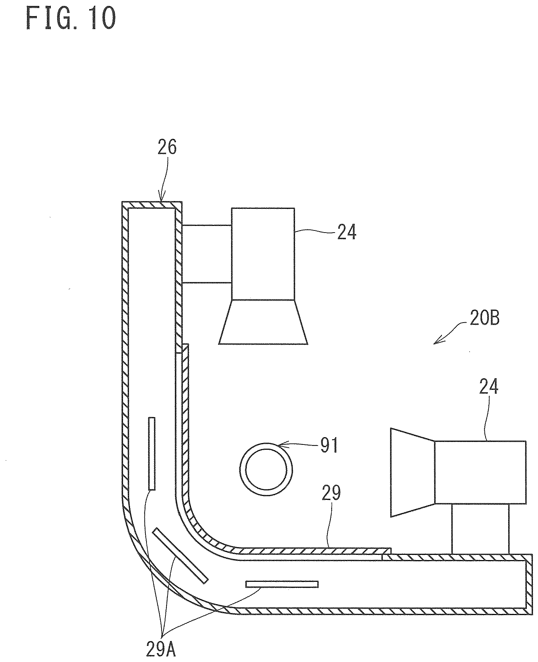

A measuring device 20B according to the present embodiment is a modification of the first embodiment, and includes a plurality of the (for example, two) cameras 24 as illustrated in FIG. 10. The compression coil spring 91 is imaged by these cameras 24 from different directions. Specifically, as in the first embodiment, a first camera 24 images the compression coil spring 91 from the lateral direction of the forming machine 10A, and a second camera 24 images the compression coil spring 91 from the front of the forming machine 10A. The backlight 29 is provided to face correspondingly each of the pair of cameras 24. The control unit 60 (see FIG. 3) simultaneously operates the pair of cameras 24. The CPU 62A as an image processing unit performs image processing on images simultaneously captured by the pair of cameras 24, and measures the spring length L0 of the compression coil spring 91. In detail, the CPU 62 A as the image processing unit obtains an inclination angle (hereinafter, referred to as a "lateral inclination angle") of the compression coil spring 91 in the lateral direction with respect to the up-down direction from the image captured by the second camera 24. Then, the spring length L0 and the pitches P1 to P3 are obtained by correcting a portion shortened by the lateral inclination angle in the image of the compression coil spring 91 captured by the first camera 24 from the lateral direction. The outer diameter D is obtained in the same manner as in the first embodiment.

As described above, according to the configuration of the present embodiment, since the dimension and the like of the compression coil spring 91 are measured based on the images simultaneously captured by the plurality of the cameras 24, specifying the posture of the compression coil spring 91 during imaging is facilitated. Therefore, measurement error due to variation in the posture of the compression coil spring 91 can be suppressed.

### [Third embodiment]

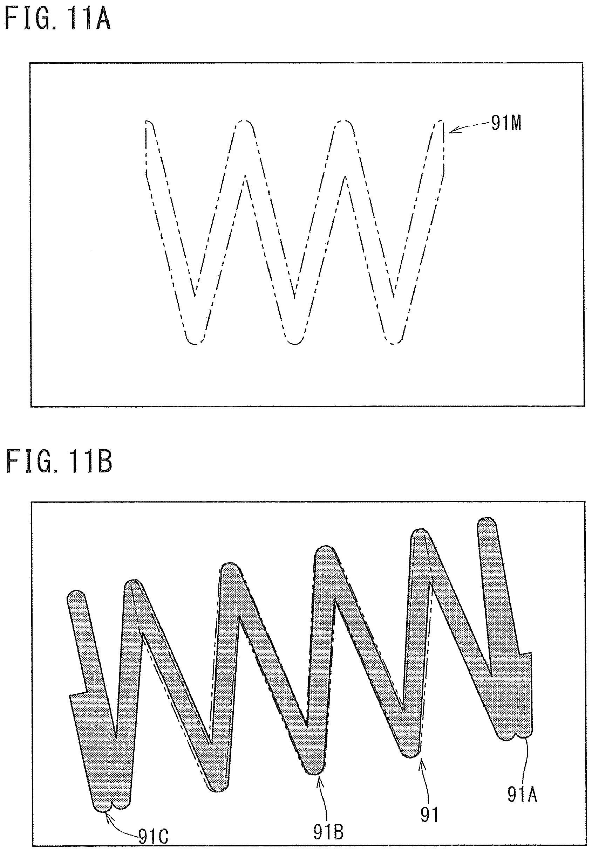

The present embodiment is a modification of the first and the second embodiments, and is different from the first and the second embodiments in measuring a matching degree between the compression coil spring 91 and a master workpiece 91M as illustrated in FIGS. 11A and 11B, instead of measuring dimension. That is, in the present embodiment, as illustrated in FIG. 11A, an image of the master workpiece 91M having a target shape of the coil body 91B of the compression coil spring 91 is stored in the ROM 62C. As illustrated in FIG. 11B, the CPU 62A as the image processing unit superimposes the master workpiece 91M (portion indicated by a two-dot chain line) upon the coil body 91B in the image of the compression coil spring 91 (portion indicated by black) captured by the camera 24, to obtain an overlapping area which is an area of the overlapping portion. Then, the overlapping area is compared with a reference value which has been set at a plurality of stages in advance. Notification at different levels such as warning, caution, and abnormality is displayed on the monitor 60M depending on which stage of the reference value the overlapping area falls within.

### [Fourth embodiment]

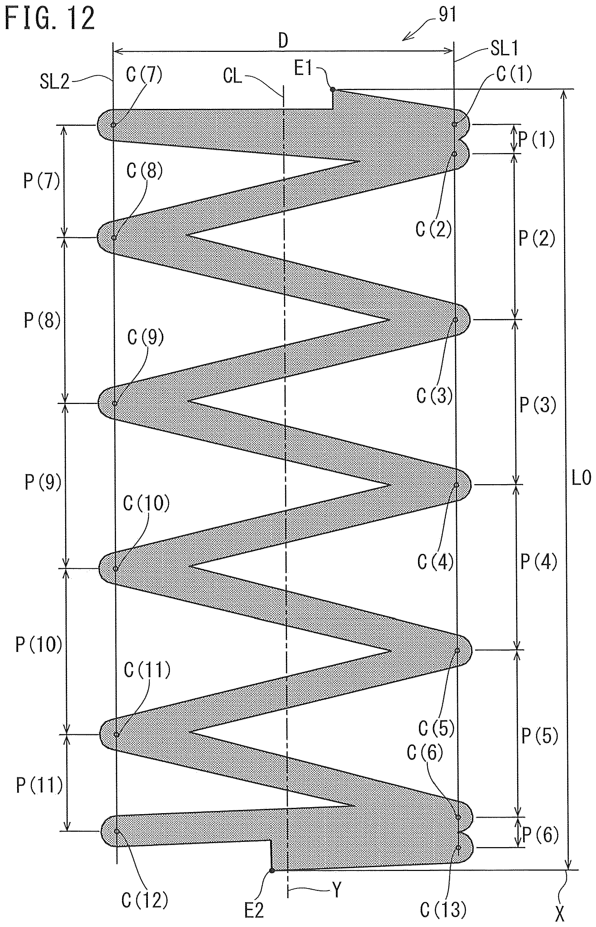

The present embodiment is different from the first embodiment in a method of specifying the dimension of the compression coil spring 91. Specifically, as illustrated in FIG. 12, when the pixels are distinguished into a black pixel in a portion corresponding to the compression coil spring 91 and a white pixel in a portion corresponding to the background and thereby the contour of the compression coil spring 91 is identified, XY-coordinate axes with a predetermined point on an image (for example, a point at the lower left corner of the image) as an origin are set. Position data of center points C(n) (n = 1, 2, 3,...) of a plurality of semicircles appearing at ends in the coil radial direction is identified. Furthermore, position data of edge points E1 and E2 at both ends of the wire rod 90, which are silhouettes of sharp protrusions at both ends of the compression coil spring 91, is also specified.

Next, a straight line SL1 with respect to the plurality of center points C(n) (C(1) to C(6) and C(13) in FIG. 12)) at one end in the radial direction of the compression coil spring 91 is specified by the least square method, and a straight line SL2 is similarly specified with respect to a plurality of the remaining center points C(n) (C(7) to C(12) in FIG.12)). Then, a straight line bisecting between the two straight lines SL1 and SL2 is specified as a center line CL. Then, an XY-coordinate axes having the center line CL as a Y-axis and a straight line orthogonal to the Y-axis and passing through one edge point E2 as an X-axis in the compression coil spring 91 is newly set, and a position data group of the center point C(n) (n = 1, 2, 3,...) and the edge points E1 and E2 is specified by the new XY-coordinate axes and stored in the flash memory 62D.

Next, using the above-described position data group, a difference between the Y-coordinate values of the edge points E1 and E2 is obtained as the spring length L0. Average of the absolute values of the X-coordinate values of the center point C(n) (n = 1, 2, 3, ...) is obtained, and the average is doubled to obtain a coil average diameter D. Standard deviation σ(r) of the absolute value of the X-coordinate values of the center point C(n) (n = 1, 2, 3, ...) is also obtained. The pitch P(n) (n = 1, 2, 3, ...) illustrated in FIG. 12 is calculated from the difference between the Y-coordinate values of the adjacent center points C(n) (n = 1, 2, 3,...). The average of the plurality of pitches P(2) to P(5) and P(8) to P(10) in the coil body 91B is obtained as the pitch P, and the standard deviation σ(P) of the pitches P(2) to P(5) and P(8) to P(10) is also obtained.

### [Other embodiment]

The measuring device 20A of the first embodiment automatically and sequentially receives the compression coil spring 91 immediately after being discharged from the forming region R1 of the forming machine 10A, but may collect a plurality of compression coil springs 91 discharged from the forming machine 10A to receive the compression coil springs 91 in any order at any timing.

Although the forming machine 10A according to the first embodiment forms the compression coil spring 91, the forming machine may be any industrial machine that produces a workpiece. For example, the forming machine may be a forming machine that presses a sheet metal to draw or iron a workpiece, or may be a processing machine that cuts or grinds a workpiece. Alternatively, the forming machine may be any other machine.

The measuring devices 20A and 20B according to the first and the second embodiments measure the dimension and the like of the compression coil spring 91 on the basis of the two-dimensional images. Alternatively, the measuring devices 20A and 20B may have a configuration in which a three-dimensional model of the workpiece is specified on the basis of images simultaneously captured by a plurality of cameras, and the dimension of the workpiece or the matching degree with the master workpiece is measured from the three-dimensional model. With such a configuration, more detailed or accurate measurement can be performed than with a configuration in which dimension and the like are measured on the basis of a two-dimensional image.

The measuring device 20B according to the second embodiment is configured to simultaneously image the compression coil spring 91 by the two cameras 24, but the compression coil spring 91 may be simultaneously captured by the three or more cameras 24. For example, three cameras may be disposed at positions equally dividing a circumferential direction around a falling region of the compression coil spring 91 into three, and backlights may be disposed between adjacent cameras to image a workpiece from three directions. Alternatively, the workpiece in air may be imaged from the oblique upper side in four directions and from the oblique lower side in four directions by the eight cameras.

The measuring devices 20A and 20B according to the above-described embodiment each include the backlight 29 facing the camera 24, but may not include the backlight 29.

### <Supplementary note>

Hereinafter, a feature group extracted from the above embodiment will be described while showing effects and the like as necessary. Note that, in the following, corresponding configurations in the above embodiment will be appropriately indicated in parentheses or the like for easy understanding, but these feature groups are not limited to the specific configurations indicated in the parentheses or the like.

### [Feature 1]

A measuring device (20A, 20B) including: a camera (24) configured to image a workpiece (91) manufactured by an industrial machine (10A) in air; and an image processing unit (62A) configured to perform image processing on an image of the workpiece (91) captured by the camera (24) and to measure a dimension of the workpiece (91) or a matching degree with a master workpiece (91M).

With the measuring device according to Feature 1, the dimension of the workpiece or matching degree with the master workpiece is measured by performing the image processing of the image of the workpiece captured in air. Therefore, occurrence of failures can be suppressed that the support member supporting the workpiece is reflected on the image and is erroneously recognized as part of the workpiece, or part of the workpiece is hidden by the support member as in the related art, and measurement by the image processing can be more accurately performed than in the related art.

### [Feature 2]

The measuring device (20A, 20B) according to Feature 1, including a workpiece guide (23) configured to guide the workpiece (91) to descend from a forming region (R1) where the workpiece (91) is formed in a forming machine (10A) that is the industrial machine (10A) to a position above a front region (R2) of the camera (24).

In the measuring device according to Feature 2, since the workpiece discharged from the forming region of the forming machine is guided by the workpiece guide so as to descend to a position above the front region of the camera and then falls into the front region of the camera, a posture of the workpiece during imaging is stabilized, and measurement of dimension and the like by the image processing is facilitated.

### [Feature 3]

The measuring device (20A, 20B) according to Feature 2, in which the workpiece (91) is a compression coil spring (91), and the workpiece guide (23) includes a guide bar (21) having a curved rod shape with one end portion extending in a horizontal direction or a direction inclined with respect to the horizontal direction to be fitted to the inner side of the compression coil spring (91) that is being formed, and another end portion extending in a vertical direction below the one end portion.

The workpiece guide may have any structure according to the shape of the workpiece. However, when the workpiece is a compression coil spring, the workpiece guide is structured to include a guide bar having a curved rod shape, whose one end portion of the guide bar extends in the horizontal direction or the direction inclined with respect to the horizontal direction and is fitted to the inner side of the compression coil spring that is being formed, and whose the other end portion extends in the vertical direction like the workpiece guide of the measuring device according to Feature 3, so that the compression coil spring discharged from the forming region of the forming machine can be smoothly guided to the position directly above the front region of the camera. In addition, since the compression coil spring falls into the front region of the camera in a posture in which the center axis is aligned along the vertical direction, imaging of the entire compression coil spring is facilitated.

### [Feature 4]

The measuring device (20A, 20B) according to the feature 3, in which the workpiece guide (23) includes a guide pipe (22) that has a pipe shape extending in the vertical direction and is disposed coaxially below the other end portion of the guide bar (21).

When the workpiece is a compression coil spring, the workpiece guide may be only the guide bar of the feature 3. However, in order for the compression coil spring to pass through an outer side of the guide bar in a state of fitting with the guide bar, the guide bar can be supported only at the starting end portion, and thus there may be a problem that the guide bar vibrates. To cope with this, the measuring device according to Feature 4 includes a guide pipe disposed coaxially below the guide bar. Since the compression coil spring passes through the inner side of the guide pipe, the compression coil spring can be firmly supported from the outside, and thus vibration can be suppressed. As a result, guiding of the compression coil spring to the position directly above the front region of the camera is stabilized, and the posture of the compression coil spring during imaging is further stabilized.

### [Feature 5]

The measuring device (20A, 20B) according to the feature 1, including a sensor (50) configured to detect the passage of the workpiece (91) above the camera (24), in which the camera (24) operates according to a detection result by the sensor (50) and images the workpiece (91).

With the measuring device according to Feature 5, the data amount of images caused by useless imaging in which the workpiece is not reflected is suppressed, and storing images is facilitated.

### [Feature 6]

The measuring device (20A, 20B) according to Feature 1, including a backlight (29) arranged to face the camera (24) from the front.

In the measuring device according to Feature 6, the workpiece and the background are easily distinguished from each other in the image of the workpiece by the backlight, and measurement of the dimension and the like of the workpiece by the image processing is facilitated.

### [Feature 7]

The measuring device (20A, 20B) according to the Feature 1, wherein the camera (24) includes a telecentric lens.

In the measuring device according to Feature 7, since the camera is provided with the telecentric lens, a difference in appearance of the workpiece between a side close to the camera and a side far from the camera is suppressed, and the measurement of the dimension and the like of the workpiece by the image processing is facilitated.

### [Feature 8]

The measuring device (20A, 20B) according to Feature 1, in which a plurality of the cameras (24) are provided and disposed so as to be able to image the workpiece (91) from a plurality of directions, and the image processing unit (62A) is configured to measure a dimension of the workpiece (91) or a matching degree with the master workpiece (91M) on the basis of images simultaneously captured by the plurality of the cameras (24).

In the measuring device according to Feature 8, since the dimension and the like of a workpiece are measured on the basis of the images simultaneously captured by a plurality of cameras, specifying the posture of the workpiece during imaging is facilitated, and measurement error due to variation in the posture of the workpiece can be suppressed.

### [Feature 9]

The measuring device (20A, 20B) according to Feature 8, in which the image processing unit (62A) is configured to specify a three-dimensional model of the workpiece (91) on the basis of images simultaneously captured by the plurality of the cameras (24), and to measure a dimension of the workpiece (91) or a matching degree with the master workpiece (91M) from the three-dimensional model.

In the measuring device according to Feature 9, since a three-dimensional model of a workpiece is specified on the basis of the images simultaneously captured by the plurality of cameras, and a dimension of the workpiece or a matching degree with the master workpiece is measured from the three-dimensional model, the measurement can be performed more in detail and more precisely than measurement based on the two-dimensional images.

### [Feature 10]

A forming machine (10A) that sequentially forms a compression coil spring (91) from a wire rod (90), the forming machine (10A) including the measuring device (20A, 20B) according to any one of Features 1 to 9 configured to sequentially measure the compression coil spring (91) sequentially formed as a workpiece (91) to be measured.

A dimension and the like of the compression coil spring sequentially formed by the forming machine of Feature 10 can be efficiently measured by the measuring device.

Note that, although specific examples of the technology included in the claims are disclosed in the present specification and the drawings, the technology described in the claims is not limited to these specific examples, and includes those obtained by variously modifying and changing the specific examples, and also includes those obtained by singly extracting a part from the specific examples.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A measuring device (20A) comprising:
a guide bar (21) having a curved rod shape with one end portion extending in a horizontal direction or a direction inclined with respect to the horizontal direction to be connected to a forming machine (10A) that forms a coil spring (91) and fitted to an inner side of the coil spring (91) that is being formed by the forming machine (10A), and another end portion extending in a vertical direction below the one end portion, the guide bar (21) discharging the coil spring (91) from the another end portion;
a camera (24) configured to image, in air, the coil spring (91) in a vertical posture freely falling from the guide bar (21); and
an image processing unit (62A) configured to perform image processing on an image of the coil spring (91) captured by the camera (24), and to measure a dimension of the coil spring (91) or a matching degree with a master workpiece (91M).

2. The measuring device (20A) according to claim 1, comprising a guide pipe (22) disposed coaxially below the another end portion of the guide bar (21), configured to receive the coil spring (91) discharged from the guide bar (21), and to guide the coil spring (91) to a position above a front region (R2) of the camera (24).

3. The measuring device (20A) according to claim 1 or 2, comprising a sensor (50) configured to detect passage of the coil spring (91) above the camera (24), wherein
the camera (24) is configured to operate according to a detection result by the sensor (50) and to image the coil spring (91).

4. The measuring device (20A) according to any one of claims 1 to 3, comprising a backlight (29) arranged to face the camera (24) from a front.

5. The measuring device (20A) according to any one of claims 1 to 4, wherein the camera (24) includes a telecentric lens.

6. The measuring device (20A) according to any one of claims 1 to 5, wherein
a plurality of the cameras (24) are provided and arranged so as to be able to image the coil spring (91) from a plurality of directions, and
the image processing unit (62A) is configured to measure the dimension of the coil spring (91) or the matching degree with the master workpiece (91M) based on images simultaneously captured by the plurality of the cameras (24).

7. The measuring device (20A) according to claim 6, wherein the image processing unit (62A) is configured to specify a three-dimensional model of the coil spring (91) based on the images simultaneously captured by the plurality of the cameras (24), and to measure the dimension of the coil spring (91) or the matching degree with the master workpiece (91M) from the three-dimensional model.

8. A forming machine (10A) configured to sequentially form a coil spring (91) from a wire rod, the forming machine (10A) comprising:
the measuring device (20A) according to any one of claims 1 to 7, wherein the measuring device (20A) is configured to sequentially measure the coil spring (91) that is sequentially formed.
